Europäisches Patentamt

European Patent Office

Office européen des brevets

(19)

(11) Publication number: **0 034 915**

**A1**

(12) # EUROPEAN PATENT APPLICATION

(21) Application number: **81300667.3**

(22) Date of filing: **19.02.81**

(51) Int. Cl.³: **F 04 D 29/46**

(30) Priority: **22.02.80 GB 8005999**

(43) Date of publication of application:
**02.09.81 Bulletin 81/35**

(84) Designated Contracting States:
**DE FR GB IT SE**

(71) Applicant: **HOLSET ENGINEERING COMPANY LIMITED**
**P.O. Box A9**
**Turnbridge Huddersfield, HD1 6RD(GB)**

(72) Inventor: **Pearson, Ronald Denzil**
**Curbar Edge 2 Rowlands Close**
**Bathford Bath BA1 7TZ(GB)**

(72) Inventor: **Wallace, Frank Julius**
**Cedarwood Cottage Sion Road**
**Bath(GB)**

(74) Representative: **Huntingford, David Ian et al,**
**W.P. THOMPSON & CO. Coopers Building Church Street**
**Liverpool L1 3AB(GB)**

(54) **Improvements in radially inward flow turbines.**

(57) A radially inward flow turbine has an annular nozzle arrangement (25) through which pressurized gas is passed in a generally radially inward direction from an annular inlet passage (24) to a bladed turbine wheel (16). The nozzle arrangement (25) is defined by parts (26, 28) of the turbine housing (10) which are relatively displaceable axially of the turbine for varying the dimensions of the nozzle arrangement (25) and hence for varying the turbine air pressure ratio. In order to enable the dimensions of the nozzle arrangement (25) to be varied without problems of seizure of the relatively displaceable parts, the latter parts are in the form of relatively displaceable rings (26, 28) which each carry a respective annular array of angularly spaced vanes (36, 34) for directing the gas flow from the annular inlet passage (24) onto the turbine blades (20). The angular positions of the vanes (36, 34) on the rings (26, 28) are such that the vanes (34) on the ring (28) are interposed with the vanes (36) on the ring (26). Relative axial displacement of the rings (26, 28) varies the extent of axial overlap of the vanes (36, 34) when they are in their interposed state.

F I G.1

F I G.5.

-1-

## DESCRIPTION

### "IMPROVEMENTS IN RADIALLY INWARD FLOW TURBINES"

The present invention relates to radially inward flow turbines and is particularly, but not exclusively, concerned with such turbines as used in automobile engine turbochargers.

Automotive diesel engines operate over a wide r.p.m. range and the degree of supercharging that is applicable to a particular engine will depend on the r.p.m. range, the permissible maximum boost level, maximum smoke level, and the maximum exhaust temperature.

The engine torque increase to maximum as r.p.m. decreases is generally 15 to 20% at an r.p.m. that is 65% of maximum rated engine r.p.m.

It is normally considered to be an improvement if the torque increase to maximum is greater than 20% at an r.p.m lower than 65% of the maximum rated r.p.m. When an engine is operating at maximum rated r.p.m the air fuel ratio is approximately 30:1, this ratio reduces to about 23:1 at maximum torque r.p.m. Thus the airflow requirement at maximum torque r.p.m. would be

$$\frac{23}{30} \times 65\% = 49.8\% \text{ of air required at max. r.p.m.}$$

The normal engine turbocharger has a pressure ratio or air density ratio which is approximately proportional to the cube of the engine r.p.m. Therefore, if an engine turbocharger is designed to operate at 2.0:1 pressure ratio i.e. 1.5:1 air density ratio, at maximum engine r.p.m, its air delivery at maximum torque r.p.m would be

$$\sqrt[3]{\frac{1.5}{1.5}} \times 65\% = 49.6\% \text{ of air delivered at max.r.p.m.}$$

Thus the engine air requirements and turbocharger air delivery are in balance. This does, however, impose a limit on the maximum torque achievable by means of a normal turbocharger, in that any increase in fuel delivery to increase maximum torque would result in a reduction in the air fuel ratio and maximum smoke, or temperature limitations, would probably be met.

The only way increased engine fuelling at maximum torque can be accepted is by simultaneously increasing the turbocharger air density ratio (boost pressure).

It is known that this can be achieved by altering the cross-sectional area of the turbine housing or by altering the size of the inlet nozzle or nozzles to the turbine wheel. If the cross-sectional area of the housing or size of the nozzle or nozzles is decreased as engine r.p.m. decreases then the boost pressure at a reduced r.p.m. will increase, relative to the boost pressure achieved with a fixed turbine housing, due to the greater pressure drop and hence energy utilisation across the turbine.

Inlet nozzles for radially inward flow turbines may comprise a single, substantially annular passage which directs high energy level exhaust gas, or other operating fluid, from an annular chamber within the turbine housing to the turbine wheel. Alternatively the single annular passage may be divided by vanes disposed therein into a plurality of discrete angularly spaced nozzles whose purpose is to guide the exhaust gas flow onto the wheel in a manner to improve the turbine efficiency.

The known arrangements employing inlet nozzles whose size is variable take two general forms. In the case where the passage is a plain annular slot, it is known to define one axial end of the passage by the face of an annular piston which is displaceable towards and away from an opposing, fixed axial end or the passage to vary the width of the nozzle. The disadvantage of this arrangement is that it cannot achieve an efficiency comparable with those arrangements employing a plurality of discrete angularly spaced nozzles. In the case of those arrangements which do employ a series of angularly spaced discrete nozzles, variability of size has been achieved previously by mounting a plurality of vanes on a movable axial end wall of the passage, the vanes being displaceable into and out of a corresponding plurality of matching, close-fitting slots in an opposing fixed axial end wall of the passage. The problem in practice with such an arrangement is that, after a period of use, the slots receiving the vanes tend to become blocked by sticky deposits carried in by the compressed gas (particularly in the case of exhaust gases) so that the complete assembly eventually becomes seized.

It is an objective of the present invention to provide a variable nozzle arrangement which achieves the advantageous gas flow characteristics and efficiency associated with those arrangements employing a series of angularly spaced, discrete nozzles whilst substantially eliminating the possibility of seizure of the relatively moving parts, particularly at engine max torque r.p.m.

In accordance with the present invention, there is provided a radially inward flow turbine having a generally annular nozzle arrangement through which pressurized gas is passed in a generally radially inward direction from an annular inlet passage to a bladed turbine wheel, the nozzle arrangement being defined by parts of the turbine housing which are relatively displaceable axially of the turbine for varying the dimensions of the nozzle arrangement and hence for varying the turbine air pressure ratio, and wherein the relatively displaceable parts each carry a respective annular array of angularly spaced vanes for directing the gas flow from the annular inlet passage onto the turbine blades, the angular positions of the vanes on the parts being such that the vanes on one said part are, or can be, interposed with the vanes on the other part, said relative axial displacement of the parts varying the extent of axial overlap of said vanes when in said interposed state.

When the relatively displaceable parts are positioned such that the vanes are fully interposed with each other, both sets of vanes and the walls to which they are attached, co-operate to form a plurality of discrete angularly spaced inlet nozzles. The arrangement then operates with the higher efficiency associated with a turbine having such a plurality of angularly spaced inlet nozzles as compared to nozzle arrangements consisting of a single annular slot.

Conveniently the two sets of vanes are carried by respective rings, disposed coaxially of the turbine axis, one of which is fixed relative to the turbine housing and the other of which is selectably axially displaceable.

It will be appreciated that in an arrangement in accordance with the present invention the displaceable vanes do not move into and out of close fitting slots or recesses so that the seizure problem of the known arrangements is avoided.

The invention is described further hereinafter, by way of example, with reference to the accompanying drawings, in which:-

Fig.1 is a sectional side view of part of one embodiment of a turbine in accordance with the present invention, showing the displaceable ring in its minimum flow area position;

Fig.2 is a sectional view corresponding to Fig.1 but showing the displaceable ring in its maximum flow area position;

-5-

Fig.3 is a diagrammatic partial section on the line III-III in Fig.1;  and

Figs. 4 and 5 are developed plan views of the region containing the vanes and corresponding to the vane positions of Figs. 1 and 2, respectively.

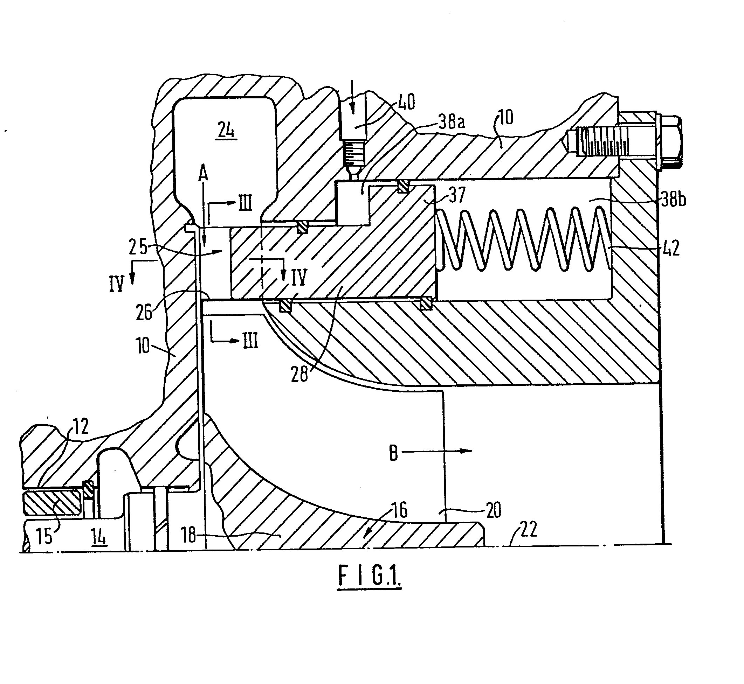

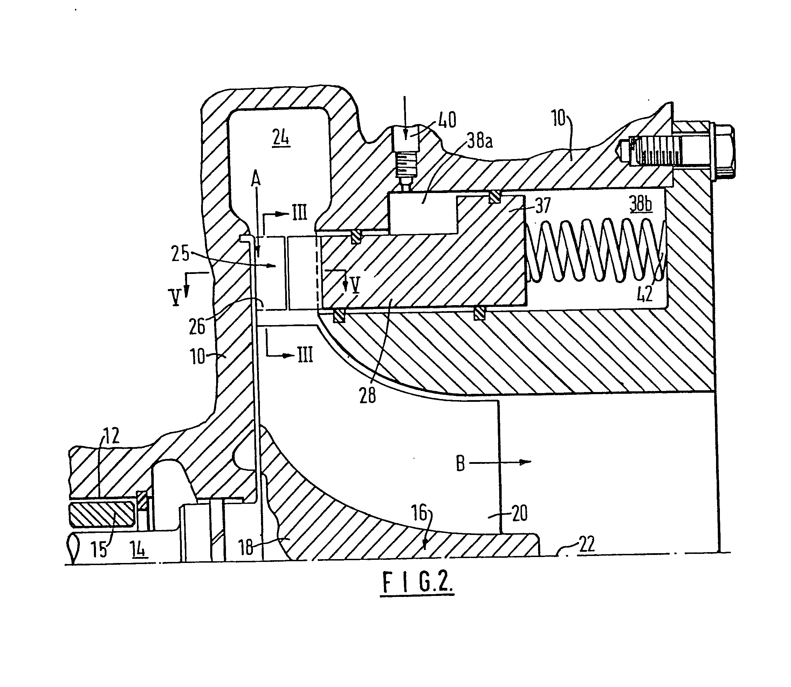

With reference to Figures 1 and 2, numeral 10 identifies a turbine housing having a bore 12 within which is a shaft 14 journalled by a suitable bearing 15. A turbine wheel 16 is mounted on shaft 14 and comprises a generally frusto-conical hub 18 carrying a plurality of thin angularly spaced turbine blades 20. At a position radially outwardly of the blades 20, the housing 10 defines an annular inlet chamber 24 to which gas having a high energy level is supplied from a source (not shown) by way of one or more passages (not shown). In accordance with conventional turbocharger practice, the turbocharger normally has a compressor wheel (not shown) mounted within a compressor casing driven by the turbine through shaft 14.

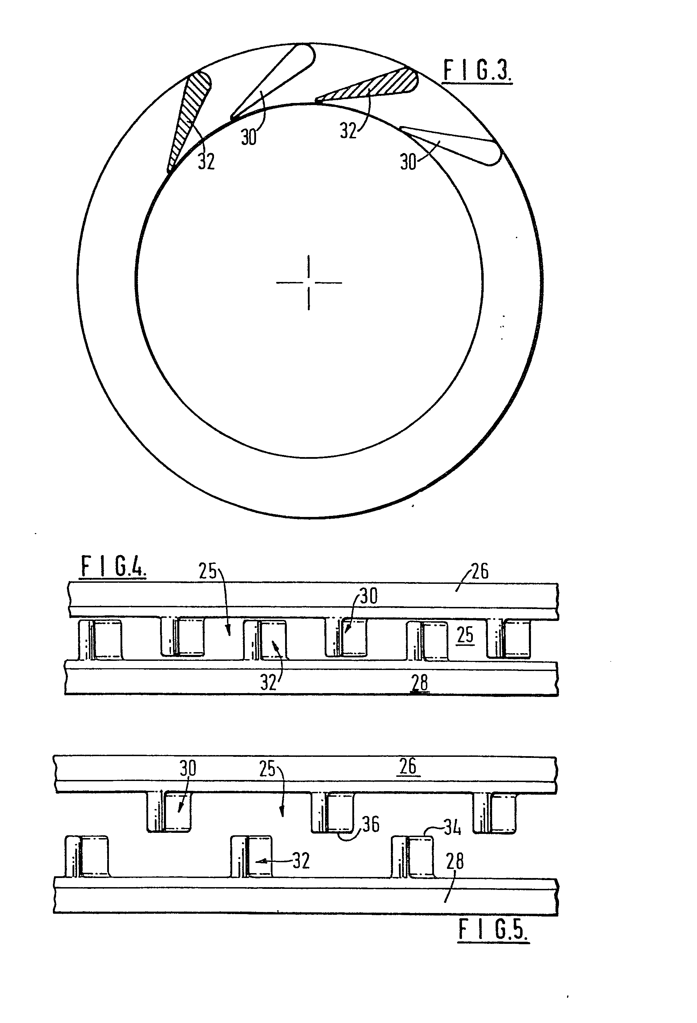

The radially inner side of the annular chamber communicates with a generally annular passage 25 defining a nozzle arrangement whereby the high energy level gas from the chamber 24 is directed inwardly as indicated by arrow A, so that it passes over the turbine blades 20 to impart rotation thereto. After passing over the turbine blades the spent gas exits generally axially as indicated by arrow B. As seen most clearly in Figs. 3, 4 and 5, the nozzle arrangement comprises a first ring 26 which is fixed relative to the turbine housing and a second ring 28 which is axially, but non-rotationally, displaceable relative to the turbine housing 10. The fixed ring 26 carries a first plurality of vanes 30 and the movable ring 28 carries a second plurality of vanes 32, the vanes 30, 32 being shaped and orientated as best seen in Fig.3. The vanes 30, 32 are positioned such that, when the ring 28 is in its advanced position (Fig.4) providing a minimum flow area, the vanes 32 lie in angular spaces between the fixed vanes 30 with considerable lateral clearance, again as best seen in Fig.3. On the other hand, when the ring 28 is in its retracted position (Fig.5) providing a maximum flow area, the ends 34 of the vanes 32 lie substantially in the same radial plane as the ends 36 of the fixed vanes 30 or may even lie in a plane spaced in a direction away from the fixed ring 26, from the plane containing the ends 36.

It will be appreciated that the displacement of the sliding ring 28 results not only in a change to the effective nozzle area but in a change to the proportion of the total nozzle area blocked by the vanes and also to the proportion of the nozzle width over which the vanes are effective to direct the airflow.

Thus, when the sliding ring 28 is fully retracted, the vanes extend only across approximately half the overall nozzle gap and hence the inflowing gas is only partially guided by the vanes 30, 32, there being between each pair of adjacent nozzles 30 and between each pair of adjacent nozzles 32, a respective space wherein the gas can flow directly to the blades 16 without encountering any vane 30 or 32.

The position of the displaceable ring 28 is controlled by means of a piston 37, formed on the ring 28, which is disposed within an annular cylinder defined within the housing 10. The piston 37 divides the cylinder into two portions, the part 38a being selectably connectable to a source of compressed fluid via a port 40 and the portion 38b containing a plurality of springs 42 which bias the piston towards the left as viewed in Figs. 1 and 2, i.e. towards the advanced position of the vanes 32.

The supply of gas (normally engine exhaust gases or air) to the chamber 38a is effected by a control system (not shown) in response to one or more engine or turbocharger operating parameters, such as boost pressure, turbine inlet pressure, engine load or engine r.p.m. Such parameters may be monitored using a microprocessor system. Microprocessors can be used to monitor a selected parameter or parameters and compute the position of the sliding ring 28 to give the required nozzle size. The system can be a simple steady state position system or a more complex transient condition system, or a combination of both steady state and transient conditions.

The control system referred to above uses air pressure reacting against springs to control the position of the movable vanes. However, many other systems could be used in alternative arrangements to effect this control, for example a face cam, a helical groove and an air cylinder; a gear and worm arrangement; an epicyclic arrangement; and an air cylinder and rod linkage.

All such control systems can be mounted at remote positions in relation to the housing 10 and connected, where appropriate to the sliding ring 28 with rods. The gas can then be sealed using bellows or sealing rings around the rods.

CLAIMS

1.     A radially inward flow turbine having a generally annular nozzle arrangement (25) through which pressurized gas is passed in a generally radially inward direction from an annular inlet passage (24) to a bladed turbine wheel (16), the nozzle arrangement (25) being defined by parts (26,28) of the turbine housing (10) which are relatively displaceable axially of the turbine for varying the dimensions of the nozzle arrangement (25) and hence for varying the turbine air pressure ratio, characterised in that the relatively displaceable parts (26,28) each carry a respective annular array of angularly spaced vanes (36,34) for directing the gas flow from the annular inlet passage (24) onto the turbine blades (20), the angular positions of the vanes (36,34) on the parts (26,28) being such that the vanes (34) on one said part (28) are, or can be, interposed with the vanes (36) on the other part (26), said relative axial displacement of the parts (26,28) varying the extent of axial overlap of said vanes (36,34) when in said interposed state.

2.     A turbine as claimed in claim 1 wherein said relatively movable parts comprise respective rings disposed coaxially of the turbine axis, one (26) of said rings being fixed relative to the turbine housing (10) and the other (28) being selectably axially displaceable relative to the housing (10).

3.     A turbine as claimed in claim 2 wherein, when the dimensions of the nozzle arrangement (25) are in one extreme condition, the free ends of the vanes (36,34) are substantially coplanar.

4.     A turbine as claimed in claim 2 wherein, when the dimensions of the nozzle arrangement (25) are in one extreme condition, the vanes (34,36) occupy positions in which they do not overlap one another in the axial direction.

5.      A turbine as claimed in claim 3 or 4 wherein, when the dimensions of the nozzle arrangement (25) are in the other extreme condition, the axial ends of each array of vanes lie substantially against an opposing wall surface of the ring carrying the other array.

6.      A turbine as claimed in claim 2, 3, 4 or 5 wherein the movable ring is spring biassed to a position to achieve said other extreme condition of the nozzle arrangement (25) but can be selectably displaced against the spring bias to vary said dimensions from the latter condition.

7.      A turbine as claimed in claim 6 wherein the movable ring (28) carries a piston (37) disposed within a cylinder, the piston dividing the cylinder into two portions, the portion (38a) being selectably connectible to a source of compressed fluid and the portion (38b) containing a plurality of springs (42) for effecting said spring bias.

F I G.1.

F I G.2.

0034915

3/3

F I G.3.

F I G.4.

F I G.5.

0034915

European Patent
Office

**EUROPEAN SEARCH REPORT**

Application number

EP 81 30 0667.3

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | Patents Abstracts of Japan Vol. 2, Nr. 157, 27 December 1978 page 5213M78 & JP - A - 53 - 122907 -- | 1 | F 04 D 29/46 |
| | Patents Abstracts of Japan Vol. 3, No. 154, 18 December 1979 page 37M85 & JP - A - 54 - 131104 -- | 1 | |
| A | DE - A - 2 262 883 (GENERAL ELECTRIC CO.) * claim 1 * ---- | | **TECHNICAL FIELDS SEARCHED (Int. Cl.³)** F 01 D 9/06 F 02 B 37/00 F 02 B 41/10 F 02 C 7/00 F 04 D 29/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | |
|---|---|---|
| Place of search Berlin | Date of completion of the search 30-04-1981 | Examiner CANNICI |

EPO Form 1503.1 06.78